## Europäisches Patentamt
## European Patent Office
## Office européen des brevets

(19)

(11) Numéro de publication: **0 226 967 B1**

(12) **FASCICULE DE BREVET EUROPEEN**

(45) Date de publication du fascicule du brevet:
**27.12.89**

(51) Int. Cl.⁴: **B60B 21/12**, B60C 17/04

(21) Numéro de dépôt: **86117273.2**

(22) Date de dépôt: **11.12.86**

(54) **Dispositif de securité pour roulage de secours.**

(30) Priorité: **16.12.85 FR 8518747**

(43) Date de publication de la demande:
**01.07.87 Bulletin 87/27**

(45) Mention de la délivrance du brevet:
**27.12.89 Bulletin 89/52**

(84) Etats contractants désignés:
**AT BE CH DE ES FR GB GR IT LI LU NL SE**

(56) Documents cités:
**BE-A- 541 988
CH-A- 191 998
DE-A- 1 505 120
FR-A- 2 005 856
FR-A- 2 418 104
GB-A- 1 249 621
US-A- 1 389 806**

(73) Titulaire: **MICHELIN & CIE (Compagnie Générale des Etablissements Michelin) Société dite:, 4 rue du Terrail, F-63000 Clermont-Ferrand(FR)**

(72) Inventeur: **Hernandez, Alain, 16, allée des Mésanges, F-63100 Clermont-Ferrand(FR)**

(74) Mandataire: **Renaudie, Jacques et al, Michelin & Cie Service K. Brevets, F-63040 Clermont-Ferrand Cédex(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les systèmes grâce auxquels on procure aux pneumatiques la capacité de continuer à rouler et à porter la charge lorsqu'ils subissent une avarie. Plus particulièrement, elle se rapporte aux appuis rigides disposés à l'intérieur du pneumatique, inactifs en fonctionnement normal, et empêchant un affaissement complet du pneumatique en cas de crevaison.

On connait déjà de nombreux dispositifs de ce genre, comme par exemple celui décrit dans la demande de brevet FR 2 393 689, qui correspond au préambule de la revendication 1. Un appui de ce genre est habituellement composé de plusieurs secteurs qui doivent être assemblés à l'intérieur du pneumatique et liés entre eux le plus souvent par des boulons et des écrous. Les dispositifs connus, s'ils confèrent aux pneumatiques des performances correctes en roulage de secours, posent cependant des problèmes de montage et de démontage qui sont à ce jour mal résolus.

Le temps requis pour l'assemblage, les outils nécessaires (parfois même de l'outillage spécifique), rendent l'opération longue et fastidieuse. On utilise d'ailleurs souvent des jantes spécialement adaptées ou des jantes à rebord latéral démontable et ce, même pour des équipements de voiture de tourisme. La hauteur radiale de l'appui est en général telle qu'il ne peut être introduit dans le pneumatique, entre les bourrelets, qu'en morceaux séparés appelés secteurs. Cela impose donc que ces secteurs soient assemblés entre eux dans le pneu, donc dans une position qui rend les manipulations difficiles.

Il a déjà été proposé de simplifier la liaison entre secteurs. Le brevet US 3 397 728 propose d'utiliser le principe de liaison par tenon et mortaise. Cependant, un tel dispositif ne comporte aucun effet de serrage des secteurs entre eux dans le sens circonférentiel. Or, toute fabrication industrielle implique nécessairement des tolérances sur les cotes et sur les formes, même si ces tolérances peuvent être très étroites au prix d'un coût de fabrication élevé. En conséquence, un tel dispositif présente nécessairement des jeux entre les pièces constitutives, et donc provoque des chocs et des vibrations en usage.

L'objectif de la présente invention est de proposer un dispositif de sécurité du genre décrit, qui puisse être monté très simplement à l'intérieur du pneumatique, sans aucun outillage, sans préjudice pour le fonctionnement normal de l'ensemble tournant et sans altérer la capacité de procurer un roulage de fortune en cas de crevaison.

Le dispositif de sécurité selon l'invention est défini dans la revendication 1. Ce dispositif est destiné à être monté dans un ensemble comprenant un pneumatique et une jante dont un bord latéral est démontable, ledit dispositif comprenant un anneau rigide constitué par plusieurs secteurs dont la surface radialement extérieure définit un appui radial pour la bande de roulement du pneumatique lorsque celui-ci est dégonflé, ledit anneau rigide étant monté sur et autour d'une pièce annulaire en matériau élastique, elle-même disposée sur la jante en position de montage, les moyens de liaison entre lesdits secteurs sont constitués par des queues-d'aronde et des mortaises correspondantes se développant sur la moitié inférieure de la hauteur radiale dudit anneau rigide.

Les exemples de réalisation décrits dans la suite illustrent l'invention et permettent de mieux la comprendre.

La figure 1 est une coupe radiale d'un dispositif de sécurité monté sur une jante, à l'intérieur d'un pneumatique.

La figure 2 montre en détail un mode de réalisation des moyens de liaison entre secteurs.

Les figures 3 à 5 illustrent le mode d'assemblage de l'anneau rigide.

La figure 6 montre une variante de réalisation.

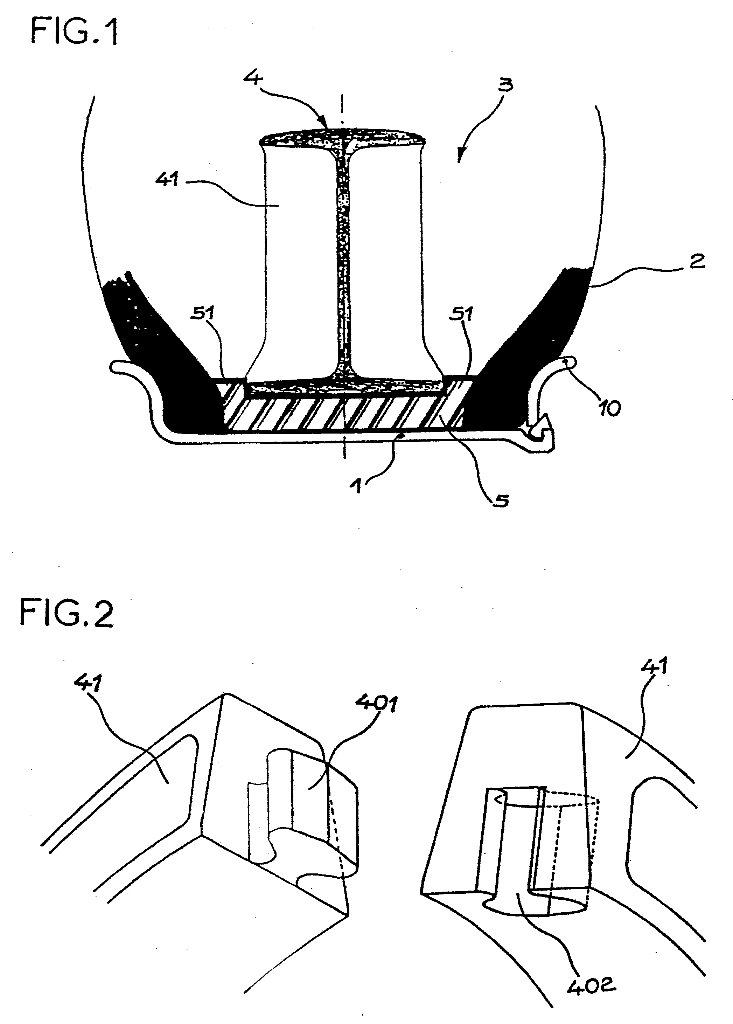

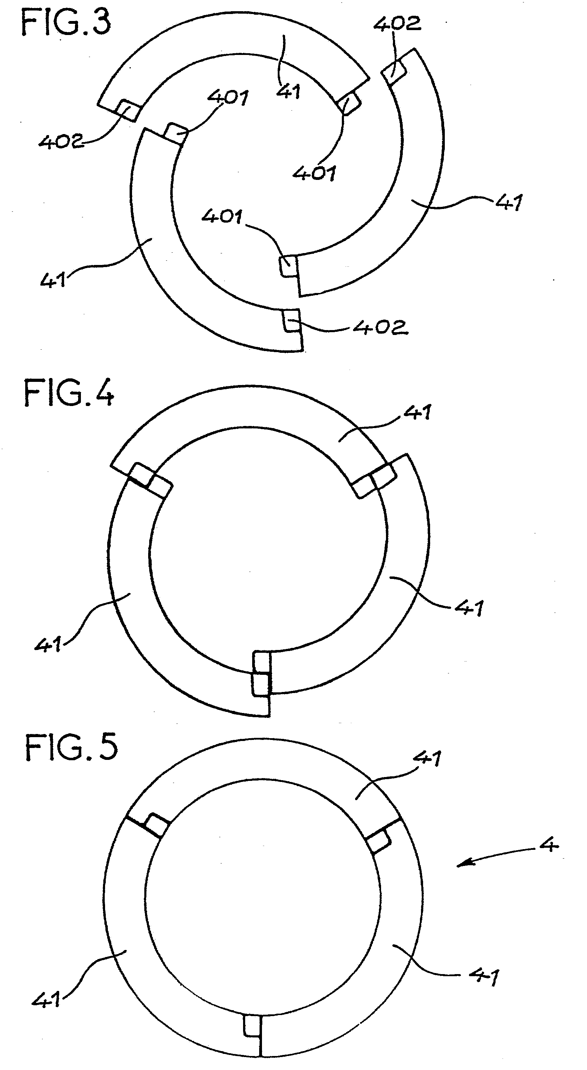

A la figure 1, on voit un ensemble comprenant une jante 1 sur laquelle on a monté un pneumatique 2 pourvu d'un dispositif de sécurité 3. La jante 1 comporte un bord latéral démontable 10. Le dispositif de sécurité 3 selon l'invention comprend essentiellement un anneau rigide 4 et une pièce annulaire 5 en matériau élastique. L'anneau rigide 4 est constitué dans cet exemple par trois secteurs 41 que l'on voit mieux sur les figures 3 à 5. La surface radialement extérieure de ces secteurs 41 constitue un appui dans le sens radial pour la bande de roulement du pneumatique 1, comme cela est bien connu en soi. Du côté radialement intérieur, l'anneau rigide appuie sur une pièce annulaire 5 réalisée ici en caoutchouc. Cette pièce annulaire 5 sert également de centrage axial dudit anneau rigide 4 par rapport à cette pièce annulaire 5 en caoutchouc et donc par rapport à la jante 1 puisque l'anneau rigide 4 est disposé entre deux nervures 51 réalisées sur et faisant partie intégrante de ladite pièce annulaire 5.

La figure 2 montre les extrémités dans le sens circonférentiel de deux secteurs 41. Ces extrémités seront adjacentes en position de montage. On voit donc que les moyens de liaison sont de formes complémentaires : l'extrémité de l'un des secteurs comporte une queue-d'aronde 401 tandis que l'extrémité de l'autre secteur comporte une mortaise 402 de forme complémentaire. Comme on le voit aux figures 3 à 5, chaque secteur est identique et comporte donc à l'une de ses extrémités une queue-d'aronde 401 et à l'autre de ses extrémités une mortaise 402. Les queues-d'aronde 401 et les mortaises 402 se développent au maximum sur la moitié inférieure de la hauteur radiale dudit anneau rigide.

Le montage de l'ensemble se fait très facilement. Le pneumatique étant couché horizontalement sur un plan de travail, on introduit les trois secteurs 41 à l'intérieur en respectant leur orientation relative pour que les queues-d'aronde 401 et les mortaises 402 soient adjacentes. Les queues-d'aronde 401 sont ensuite emboîtées dans les mortaises 402 par glissement et rapprochement relatif dans le sens radial comme indiqué par les figures 3, 4 et 5. Ainsi, le montage des secteurs ne nécessite strictement aucun outil. Cela est possible parce que la conception des moyens de liaison (queues-d'aronde 401 et mortaises 402) laisse un jeu suffisant. Les trois secteurs 41 forment maintenant un anneau (voir figure 5). On dispose ensuite la pièce annulaire 5 en caoutchouc à l'intérieur de l'anneau rigide 4 formé par les trois secteurs 41. Cela se fait très facilement grâce à la déformabilité de cette pièce. En variante de réalisation, cette pièce peut être fendue transversalement et peut donc être enroulée en spirale pour être introduite facilement à l'intérieur de l'anneau rigide 4 formé par les secteurs 41. Le pneumatique 2, à l'intérieur duquel se trouve le dispositif de sécurité 3 peut maintenant être monté sur une jante 1 à bord démontable. Le pneumatique 1 à l'intérieur duquel se trouve le dispositif de sécurité 3 est glissé sur la jante. A l'étt libre de toute contrainte, la largeur de la pièce annulaire 5 en caoutchouc est supérieure à l'espace normalement disponible entre les bourrelets du pneumatique 2 lorsqu'il est monté sur sa jante 1. En conséquence, on ne peut terminer le montage de la jante sans appuyer axialement sur le bord démontable 10. On appuie donc sur ce bord 10, au besoin avec une presse, ce qui provoque une compression axiale permanente de la pièce annulaire 5 et donc une tendance à l'expansion de celle-ci dans le sens radial (coefficient de Poisson proche de 0.5). Or, dans le sens radial la pièce annulaire 5 occupe juste l'espace disponible entre la jante 1 et l'anneau rigide 4. La mise en place finale du bord de jante 1 provoque donc une pression radiale orientée vers l'extérieur, circonfèrentiellement uniforme sur l'anneau rigide 4.

Ceci permet un rattrapage des jeux entre queues-d'aronde 401 et mortaises 402 correspondantes et assure la solidité de la liaison entre les secteurs 41. De manière avantageuse, la largeur L de ladite pièce annulaire 5 à l'état libre de toute contrainte est comprise entre 101 % et 125 % de la largeur l de ladite pièce annulaire 5 enserrée par les bourrelets du pneumatique 2 monté sur sa jante 1.

Le choix de la largeur L par rapport à la largeur l est fonction notamment de la largeur de la face inférieure ou semelle de l'anneau rigide 4 par rapport à la largeur disponible entre les bourrelets : plus la largeur de la semelle est faible par rapport à la largeur l disponible entre les bourrelets en position de montage, plus la largeur L doit être grande par rapport à l pour maintenir une pression radiale suffisante sur l'anneau rigide. Le choix de la largeur L est encore conditionné notamment par les caractéristiques du matériau choisi pour ladite pièce annulaire, par la hauteur disponible entre la jante 1 et l'anneau rigide 4. Les dimensions de la pièce annulaire 5 peuvent être déterminées très facilement, compte tenu du fait que, lors de la mise en place finale du bord 10 de la jante, le foisonnement du matériau de ladite pièce annulaire 5 doit être suffisant pour assurer la solidité des liaisons par queues-d'aronde et mortaises.

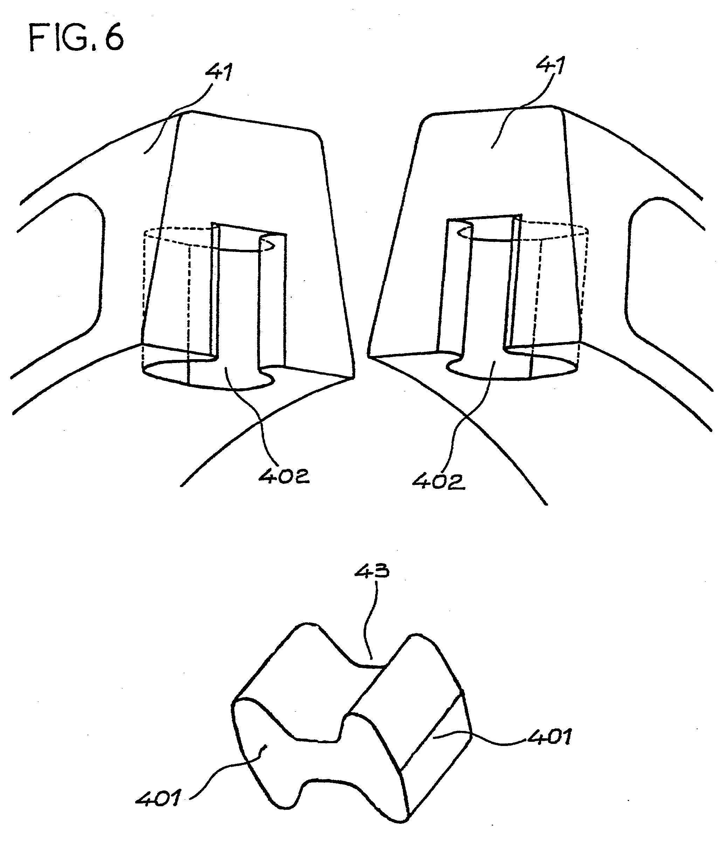

La figure 6 montre une variante de réalisation où les secteurs 41 ne comportent que des mortaises 402. La liaison entre secteurs est assurée par des pièces de liaison 43 comportant deux queues-d'aronde 401. La pièce annulaire 5 est conçue de la même façon et le montage est identique.

Les moyens permettant le gonflage du pneumatique 2 lorsqu'il est muni d'un dispositif de sécurité 3 sont bien connus de l'homme de l'art. Ils ne font pas partie de la présente invention et n'ont pas été représentés.

## Revendications

1. Dispositif de sécurité (3) destiné à être monté dans un ensemble comprenant un pneumatique (2) et une jante (1) dont un bord latéral (10) est démontable, ledit dispositif (3) comprenant un anneau rigide (4) constitué par plusieurs secteurs (41) dont la surface radialement extérieur définit un appui radial pour la bande de roulement du pneumatique lorsque celui-ci est dégonflé, ledit anneau rigide (4) étant monté sur et autour d'une pièce annulaire (5) en matériau élastique, elle-même disposée sur la jante (1) en position de montage, et des moyens de liaison (43, 401, 402) entre lesdits secteurs (41), caractérisé en ce que lesdits mozens de liaison entre lesdits secteurs (41) sont constitués par des queues-d'aronde (401) et des mortaises (402) correspondantes, et en ce que lesdites queues-d'aronde et lesdites mortaises correspondantes se développent au maximum sur la moitié inférieure de la hauteur radiale dudit anneau rigide (4).

2. Dispositif selon la revendication 1, caractérisé en ce que la largeur L de la pièce annulaire (5) est supérieure à la largeur l de ladite pièce annulaire (5) en position de montage.

3. Dispositif selon la revendication 2, caractérisé en ce que la largeur L est comprise entre 101 % et 125 % de la largeur l.

4. Dispositif selon la revendication 2 ou 3, caractérisé en ce que la pièce annulaire (5) occupe juste l'espace disponible entre la jante (1) et ledit anneau rigide (4).

5. Dispositif selon la revendication 1 ou 4, caractérisé en ce que chacun desdits secteurs (41) se termine à ses extrémités dans le sens corconférentiel, d'un côté par une queue-d'aronde (401), et de l'autre par une mortaise (402).

6. Dispositif selon la revendication 1 ou 4, caractérisé en ce que chacun desdits secteurs (41) se termine, aux extrémités dans le sens circonférentiel, des deux côtés par une mortaise (402) et en ce qu'il est prévu des pièces de liaison (43) entre secteurs, lesdites pièces de liaison (43) comportant deux queues-d'aronde (401).

7. Dispositif selon l'une des revendications 1 à 6, caractérisé en ce qu'il est prévu des moyens de centrage axial (51) dudit anneau rigide (4) sur ladite pièce annulaire (5) en matériau élastique.

9. Dispositif selon la revendication 7, caractérisé en ce que lesdits moyens de centrage sont constitués par deux nervures (51) réalisées sur ladite pièce annulaire (5) en matériau élastique, entre lesquelles on dispose ledit anneau rigide (4).

9. Dispositif selon l'une des revendications 1 à 8, caractérisé en ce que ladite pièce annulaire (5) en matériau élastique est fendue transversalement.

## Claims

1. A safety device (3) mountable in an assembly comprising a tyre (2) and a rim (1) having one removable lateral flange (10), the device (3) comprising a rigid ring (4) formed of a plurality of sectors (41) whose radially outer surface defines a radial support for the tread of the tyre when the tyre is deflated, the rigid ring (4) being mounted on and around an annular part (5) of elastic material, which annular part is disposed on the rim (1) in mounted position, and comprising means (43, 402, 401) for connecting the sectors (41) together, characterized by the fact that said means for connecting the sectors together consist of dovetails (401) and corresponding mortises (402), and by the fact that the dovetails and corresponding mortises are developed at most on the lower half of the radial height of the rigid ring (4).

2. A device according to claim 1, characterized by the fact that the width L of the annular part (5) in stress-free state is greater than the width l of the annular part (5) in mounted position.

3. A device according to claim 2, characterized by the fact that the width L is between 101% and 125% of the width l.

4. A device according to claim 1, characterized by the fact that the annular part (5) in mounted position occupies precisely the space available between the rim (1) and the rigid ring (4).

5. A device according to claim 1 or 4, characterized by the fact that each of the sectors (41) is terminated at its ends in circumferential direction by a dovetail (401) on one end and by a mortise (402) on the other end.

6. A device according to claim 1 or 4, characterized by the fact that each of the sectors (41) is terminated at its ends in circumferential direction by a mortise (402) on both ends and by the fact that connecting pieces (43) between mortises are provided, the connecting pieces (43) having two dovetails (401).

7. A device according to one of claims 1 to 6, characterized by the fact that means (51) for axial centering of the rigid ring (4) on the annular part (5) are provided.

8. A device according to claim 7, characterized by the fact that the centering means consist of two tibs (51) developed on the annular part (5), between which ribs the rigid ring (4) is mounted.

9. A device according to one of claims 1 to 8, characterized by the fact that the annular part (5) is transversely slit.

## Patentansprüche

1. Sicherheitsvorrichtung, die dazu bestimmt ist, in einem Ensemble montiert zu werden, das einen Luftreifen (2) und eine Felge (1) umfaßt, deren Seitenrand (10) demontierbar ist, wobei die Vorrichtung (3) einen steifen Ring (4), der aus mehreren Sektoren (41) gebildet wird, umfaßt, dessen radial äußere Oberfläche eine radiale Stütze für die Lauffläche des Luftreifens definiert, wenn dieser nicht aufgeblasen ist, wobei der steife Ring (4) auf und um einen Ringteil (5) aus elastischem Material montiert ist, der wiederum in Montageposition auf der Felge (1) angeordnet ist, wobei Verbindungsmittel (43, 401, 402) zwischen den Sektoren (41) vorgesehen sind, dadurch gekennzeichnet, daß die Verbindungsmittel zwischen den Sektoren (41) aus Schwalbenschwänzen (401) und entsprechenden Ausnehmungen (402) bestehen und dadurch, daß die Schwalbenschwänze und die Ausnehmungen sich maximal auf der unteren Hälfte der radialen Höhe des steifen Ringes (4) erstrecken.

2 Vorrichtung nach Anspruch 1, dadurch gekennzeichnet, daß die Breite L des Ringteiles (5) größer als die Breite l des Ringteiles (5) im montierten Zustand ist.

3. Vorrichtung nach Anspruch 2, daß die Breite L zwischen 101 und 125% der Breite l beträgt.

4. Vorrichtung nach Anspruch 2 oder 3, dadurch gekennzeichnet, daß der Ringteil (5) gerade den verfügbaren Raum zwischen der Felge (1) und dem steifen Ring (4) ausfüllt.

5. Vorrichtung nach Anspruch 1 oder 4, dadurch gekennzeichnet, daß jeder der Sektoren (41) an seinen in Umfangsrichtung liegenden Enden einerseits einen Schwalbenschwanz (401) und andererseits eine Ausnehmung (402) aufweist.

6. Vorrichtung nach einem der Ansprüche 1 oder 4, dadurch gekennzeichnet, daß jeder der Sektoren (41) an jedem seiner in Umfangsrichtung liegenden Enden eine Ausnehmung (402) aufweist, und daß Verbindungsstücke (43) zwischen den Sektoren vorgesehen sind, die zwei Schwalbenschwänze (401) aufweisen.

7. Vorrichtung nach einem der Ansprüche 1 bis 6, dadurch gekennzeichnet, daß für den steifen Ring (4) axiale Zentriermittel (51) auf dem Ringteil (5) aus elastischem Material vorgesehen sind.

8. Vorrichtung nach Anspruch 7, dadurch gekennzeichnet, daß die Zentriermittel aus zwei Rippen (51), die auf dem Ringteil (5) aus elastischem Material ausgebildet sind, bestehen, zwischen denen der steife Ring (4) vorgesehen ist.

9. Vorrichtung nach einem der Ansprüche 1 bis 8, dadurch gekennzeichnet, daß der Ringteil (5) aus elastischem Material in Querrichtung geteilt ist.

FIG.1

FIG.2

EP 0 226 967 B1

FIG.3

FIG.4

FIG.5

# FIG. 6